# EUROPÄISCHE PATENTSCHRIFT

(11) **EP 0 602 383 B1**
(45) Veröffentlichungstag und Bekanntmachung des Hinweises auf die Patenterteilung: **15.07.1998**
(21) Anmeldenummer: 93118122.6
(22) Anmeldetag: 09.11.1993
(51) Int. Cl.: G05B 19/07, D04B 11/00

(54) **Elektronische Steuereinheit für Maschinen, insbesondere Textilmaschinen**
Electronic control device for machines, particularly for textile machines
Dispositif de commande électronique pour machines, en particulier machines textile

(30) Priorität: 18.12.1992 DE 4243000
(43) Veröffentlichungstag der Anmeldung: 22.06.1994
(73) Patentinhaber: Malimo Maschinenbau GmbH, 09120 Chemnitz (DE)
(72) Erfinder: Scheffler, Holger, D-9275 Lichtenstein (DE); Cotte, Dietrich, D-9075 Chemnitz (DE); Barth, Johannes, Dr., D-9387 Niederwiesa (DE); Zeidler, Gert, D-9104 Röhrsdorf (DE); Leheis-Barth, Kristin, D-9126 Chemnitz (DE)
(74) Vertreter: Schneider, Manfred

(56) Entgegenhaltungen:
- EP-A- 0 139 926
- EP-A- 0 267 743
- DE-A- 4 026 581
- FR-A- 2 645 661
- US-A- 3 790 815
- US-A- 4 262 336
- US-A- 4 382 810
- US-A- 4 879 644

## Beschreibung

Die Erfindung betrifft eine elektronische Steuereinheit für Maschinen, insbesondere Textilmaschinen,
- mit mehreren Funktionselementen, die zyklisch gesteuerte Bewegungsabläufe untereinander synchronisiert ausführen,
- mit einem Industriecomputer (IPC), dem Logikbausteine und ein BUS-Treiber für den externen BUS zugeordnet ist,
- mit positionsorientiert steuerbaren Motoren für den Antrieb der Funktionselemente, denen Ansteuereinheiten zugeordnet sind, die Programmspeicher für zyklische Programme und mindestens einem rechnergestützten Regelkreis besitzen, und
- mit einem Taktgeber für den Maschinentakt.

Mit der europäischen Patentanmeldung EP-A-0 600 263 wurde eine elektronische Steuereinheit für Maschinen mit hochdynamisch ablaufenden Bewegungsabläufen vorgeschlagen (Art. 54(3) EPÜ).

Durch die Komplettierung des die Maschine steuernden IPC mit einer Logikeinheit und einem BUS-Treiber für den externen BUS, sowie die Ausstattung der Ansteuereinheiten für Antriebsmotoren mit Programmspeichern und Rechnern, die interne Regelprozesse und Steuerungsaufgaben funktionsbezogen wahrnehmen und nur der koordinierenden Arbeitsweise des IPC unterliegen, ist es möglich, mit derartigen Einzelantrieben, Baugruppen mit sehr komplizierten Steuerungsaufgaben unter Echtzeitbedingungen zu steuern.

Die unmittelbare Ausführung von Steuerungs- und Regelungsprozessen vor Ort und die durch diese Ansteuereinheiten koordinierte Zusammenarbeit mehrerer Ansteuereinheiten ohne den BUS zum IPC und den IPC selbst in Anspruch zu nehmen, gestattet es, an jedem Antrieb hochkomplizierte Steuerungs- und Regelungsaufgaben im Echtzeitbetrieb auszuführen.

Damit ist prinzipiell die Voraussetzung dafür gegeben, daß Motoren nach komplizierten Bewegungsgesetzen positionsorientiert gesteuert werden können.

Die dafür erforderlichen Motoren haben den Entwicklungsstand erreicht, daß sie bei der entsprechenden Befehlsfolge in den praktisch notwendigen Zeitabschnitten, auch unter angemessener Last dem Steuerprogramm unter Echtzeitbedingungen exakt folgen können.

An Maschinen, zum Beispiel an Flachkulierwirkmaschinen, wo mehrere Funktionselemente, z.B. Nadelbarren, Abschlagbarren und Platinenbarren, mit komplizierten, aufeinander exakt abgestimmten Bewegungen angetrieben werden müssen, sind die bisher bekannten Maßnahmen zur Synchronisation der Antriebe unter allen Betriebsbedingungen nicht ausreichend.

Die große Zahl der in unterschiedlichen Kombinationen wählbaren und ablaufenden Programme erfordert einen hohen Koordinierungsaufwand zwischen den einzelnen Programmteilen.
Ein maschinenbezogener Führungsimpuls fehlt, weil die Maschine keine Hauptwelle mehr besitzt.

Damit ist es nicht möglich, auch die komplizierten und häufig wechselbaren Antriebsbewegungen der Funktionselemente mit Hilfe elektronisch gesteuerter, programmierbarer Antriebe zu realisieren.

An Flachkulierwirkmaschinen, wo die Antriebsbewegungen dieser Funktionselemente ansich äußerst kompliziert sind, wo sie im normalen Arbeitsprozeß mehrfach verändert werden müssen, bleibt es daher notwendig auf der Hauptwelle eine Vielzahl von Kurvenscheiben pro Rollenhebel anzuordnen.

Der Funktionswechsel findet hier entweder durch den Versatz der Kurvenrollen an den Rollenhebeln oder, wie beim Umschalten von der Maschenbildung auf den Deckvorgang und umgekehrt, durch einen Exzenterwellenversatz statt.

Auch das Blockieren von Rollenhebeln oder das wechselweise Koppeln mehrerer Rollenhebel mit einem Funktionselement, sind übliche Formen des Programmwechsels.

Die dafür erforderlichen mechanischen Vorrichtungen und deren Programmsteuerung sind extrem kompliziert und erfordern eine große Zahl von Einzelteilen, die völlig unterschiedliche Abmessungen haben und für eine automatische Fertigung nicht geeignet sind.

Die Übertragung und Verteilung der, mit großem Aufwand gewählten, erzeugten und gesteuerten Antriebsbewegungen, auf die Barren in mehreren Fonturen, erfordert eine große Zahl, sehr massereicher Übertragungselemente.

Wegen der hohen Präzision der notwendigen Bewegungen und der natürlichen Elastizität dieser Übertragungselemente müssen diese Teile sehr groß dimensioniert werden.
Neben dem hohen Materialaufwand für diese Teile ist der Energieaufwand für deren Bewegung doch erheblich.

In der Summe hatten diese Nachteile zur Folge, daß Maschinen dieser Art, trotz ihrer hohen Leistung pro Stellflächeneinheit gegenüber der Flachstrickerei und trotz der mit ihnen möglichen, abfallarmen Herstellung von Gewirketeilen, nur noch in sehr geringem Umfange genutzt werden.
Die aufwendige Herstellung dieser Maschinen wurde vielerorts vollständig eingestellt.

Angesichts der dringend notwendigen Reduzierung des Energiebedarfes in der Industrie insgesamt und der Forderung nach materialsparenden Technologien - sowohl bei der Maschinenherstellung als auch in der Textilindustrie - sollen die Möglichkeiten, die die elektronische Steuerungstechnik zur Zeit bietet, dazu genutzt werden, die vielgestaltigen Arbeitsbewegungen z.B. einer Flachkulierwirkmaschine, angepaßt an unterschiedliche Feinheiten, Maschenlängen, Formen, und Muster, zu realisieren.

Die Aufgabe der Erfindung besteht darin, die zyklisch sich wiederholenden Antriebsprogramme der einzelnen Wirkwerkzeuge auch bei unterschiedlichen und hohen Maschinengeschwindigkeiten unter unterschiedlichen Betriebsbedingungen in jeder Phase der Bewegung exakt zu synchronisieren.

Diese Aufgabe wird durch die in Anspruch 1 definierten Elemente gelöst.

Die Ableitung veränderlicher Zyklus- und Bewegungstakte aus der Taktfolge eines Takterzeugers - das kann auch der Führungstakt des IPC sein - liefert ein Impulssystem, das einerseits an der Zyklusgrenze die Wählbarkeit und das synchronisierte Starten von zyklischen Programmen ermöglicht, und andererseits die Ausführung komplizierter Bewegungsformen zwischen zwei Zyklustakten auch bei unterschiedlichen Betriebsgeschwindigkeiten der Maschine ermöglicht.

Das koordinierte Erzeugen von Zyklustakt und Bewegungstakt gestattet es, die Bewegungen der Barren - z. B. einer Flachkulierwirkmaschine - ebenso synchron zu steuern, wie es mit Kurvenscheibenpaketen bisher möglich war.

Bewegungskorrekturen oder prinzipiell abweichende Bewegungsformen innerhalb eines Zyklus sind durch die wahlfreie Vorgabe eines Programmes allen erforderlichen Bedingungen anpaßbar.
Die Maschinen können ohne mechanische Veränderungen an den Antriebselementen, nur durch den Austausch der Arbeitselemente und der Programme, auf andere Feinheiten umgestellt werden.
Die Umstellung auf andere Muster bedarf in den meisten Fällen nur einer Programmänderung.

Der mechanische Aufwand für die gesamte Maschine wird extrem reduziert. Die verwendeten Arbeitselemente und ihre Antriebe können in Form von Baureihen vereinheitlicht werden. Ihre Fertigung kann in großen Stückzahlen rationell realisiert werden.

Durch die sehr deutliche Reduzierung der zu bewegenden Massen, ist, bei Verwendung derartig gesteuerter Antriebe eine erhebliche Energieeinsparung bei höherer Maschinengeschwindigkeiten möglich.
Die, bisher, wegen des Programmwechsels der Kurvenscheiben notwendige kraftschlüssige Gestaltung des Antriebes, wird vermieden.
Eine formschlüssige Bewegungsübertragung vom Abtriebsglied des Motors auf das jeweilige Funktionselement wird jetzt möglich. Auf die sehr kräftigen Federn zur Sicherung des Kraftschlusses kann man jetzt verzichten.
Maschinenausfälle, die auf den Bruch dieser Federn zurückzuführen waren, werden vermieden.

Die Energie, die für das Spannen der Federn notwendig war, kann jetzt eingespart werden.

Die Zuführung des Bewegungs- und Zyklustaktes parallel zu den Steuerungsbefehlen über den externen BUS an die Ansteuerungseinheiten, nach Anspruch 2, gewährleistet ein völlig synchrones und koordiniertes Arbeiten aller Motoren.

Durch die Verwendung von Glasfasern bzw. Lichtleitkabeln für den BUS können auch sehr kleine Differenzen zwischen den einzelnen Antrieben sicher vermieden werden.
Der Einsatz eines sogenannten "durchstimmbaren Frequenzgenerators" nach Anspruch 3, in Verbindung mit einem digitalen Pulsfrequenzwandler, sind die beiden Signale für Zyklus und Bewegung auf einfache Art mit bekannten Baugruppen realisierbar.

Das erfindungsgemäße Impulssystem läßt sich auch mit Mitteln realisieren, die bisher an derartigen Maschinen dem Grunde nach bekannt sind.
Ein, bezüglich seiner Drehzahl stellbarer Motor treibt mit seinem Läufer einen Inkrementalen Geber (IGR). Dessen Impulsfolge kann man vorzugsweise als Bewegungstakt verwen den. Der Zyklustakt wird daraus mittels Frequenzteiler abgeleitet.

Besondere Vorteile der Erfindung werden, insbesondere an Flachkulierwirkmaschinen gemäß Anspruch 5 wirksam.

Dabei ist zu bemerken, daß die Nadelbarre, die Abschlagbarre und die Platinenbarre jeweils einen horizontalen und einen vertikalen Antrieb besitzen und zweckmäßigerweise für jeden dieser Antriebe einen positionsorientiert steuerbaren Motor aufweisen.

Die mechanischen Elemente zum Erzeugen der jeweiligen Antriebsbewegung reduzieren sich damit auf die Getriebeglieder zur Wandlung des drehenden Motorantriebes in eine etwa translatorische, schwingende Bewegung.

Will man einen elektronischen Antrieb für mehrere gleichartige Barren einander benachbarter Fonturen einsetzen, sind Getriebeglieder für die Übertragung der Bewegung und Kräfte auf die gleichartigen Barren der einzelnen Fonturen notwendig.

Mit den miniaturisierten Programmspeichern und deren Speicherkapazität kann man vor Ort beliebige Programme für die Maschenbildung und für Deckvorgänge speichern und auf Befehl des IPC abrufen, realisieren und regeln.

Korrekturen innerhalb dieser Programme, insbesondere für unterschiedliche Maschenlängen oder auch unterschiedliche Maschinenfeinheiten können diesen Grundprogrammen als Korrekturprogramme wählbar zugeordnet werden.

Die Gestaltung der Übertragungsglieder nach Anspruch 8 bildet die Voraussetzung für die Verwendung kraftschlußfreier Übertragungselemente. Die Haltebremse sichert auch bei Stromausfall die zueinander koordinierte Position der Arbeitselemente.

Mit der Ausführung nach Anspruch 9 ist es bei Vermeidung großer Massen möglich, die Antriebsbewegung präzise auf einander benachbarte Fonturen zu übertragen.
Auch die Ausführung nach Anspruch 10 sichert das in angemessener Weise.

Die Gestaltung nach Anspruch 11, bei der der Schwingantrieb des Motors über die jeweilige Schwingwelle auf mehrere Fonturen übertragen wird, ist im wesentlichen als Übergangsvariante zu betrachten, die bei der jetzt üblichen Maschinenkonzeption die Anwendung der Erfindung bereits mit deutlichen Effekten ermöglicht.

Für die Erzeugung des Schwingantriebes aus der rotierenden Bewegung des Motors, eignet sich die Kugelspindel an einem ortsfesten Lager, gemäß Anspruch 12, besonders gut. Sie verbindet eine hohe, spielfreie Präzision der Bewegung mit geringsten Reibungsverlusten.

Insbesondere an Maschinen, bei denen pro Funktionselement ein Motor verwendet werden soll, ist es zweckmäßig, einen positionsorientiert steuerbaren Linearmotor, nach Anspruch 13 einzusetzen. Hierbei entfallen nahezu sämtliche Übertragungsglieder zur Umwandlung der rotierend schwingenden Bewegung in eine translatorische Schwingbewegung.

Evtl. noch vorhandene Hebel oder Geradführungen haben ausschließlich nur noch Führungsfunktionen.

Derartige Getriebeglieder können dann sehr leicht und massearm ausgeführt werden.
Die noch aufzubringenden Kräfte reduzieren sich im wesentlichen auf die Massenkräfte der Barren, die Maschenbildungskräfte und auf die Massenkräfte der Abtriebseinheit des jeweiligen Motors.

Die Erfindung soll nachstehend an einem Ausführungsbeispiel näher erläutert werden. In den dazugehörigen Zeichnungen zeigen:

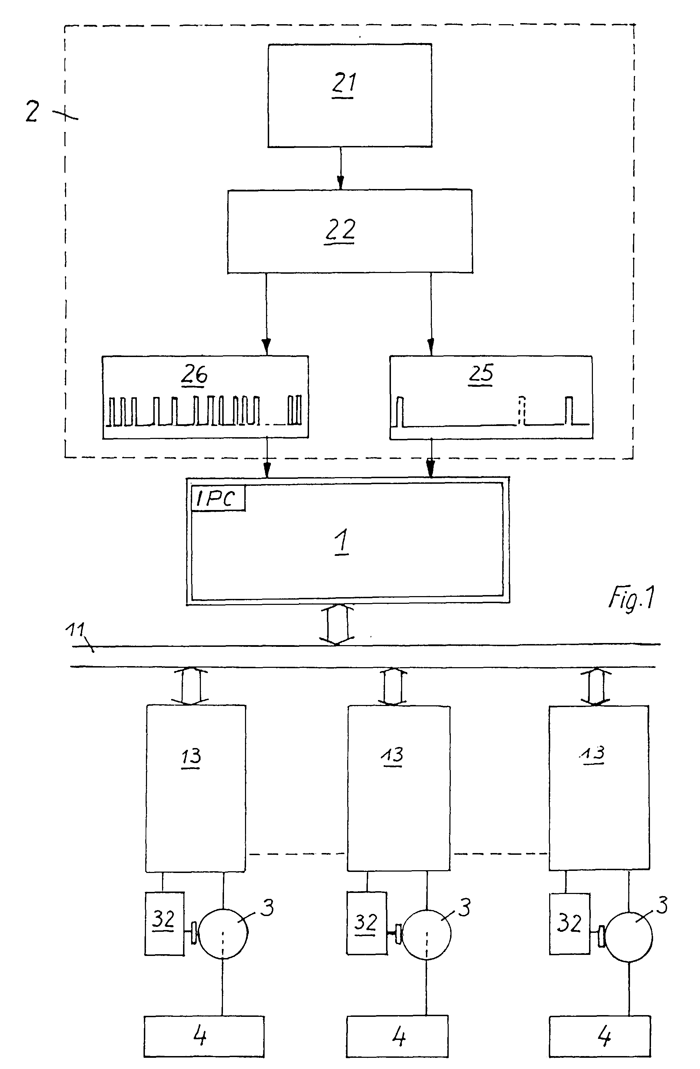

- Fig 1:: ein Gesamtschema der elektronischen Steuer einheit für eine Textilmaschine,
- Fig.2 bis 4:: drei Varianten zur Erzeugung eines Maschinentaktsystems,
- Fig. 5:: eine schematische Anordnung von Einzelantriebssystemen an einer Flachkulierwirkmaschine,
- Fig. 6:: die Anordnung eines Einzelantriebes an einer Nadelbarre in Form eines Zahnriemen' triebes,
- Fig. 7:: eine schematische Darstellung eines Barrenantriebes mit Hilfe einer Kulissenschiene,
- Fig. 8:: eine schematische Darstellung eines Schwinghebelantriebes mit Hilfe einer Kugelspindel,
- Fig. 9:: eine Antriebsanordnung für die Nadelbarre analog zu Fig. 6 mit Hilfe von Linearmotoren.

Die elektronische Steuereinheit soll am Beispiel einer Flachkulierwirkmaschine zur Herstellung regulär gewirkter Bekleidungsgegenstände dargestellt werden.

Derartige Maschinen besitzen an einer Vielzahl von Fonturen je einen Satz von Barren mit Maschenbildungselementen - Nadeln, Platinen und Abschlagplatinen, vorzugsweise für die Maschenbildung, sowie eine Deckschienenführung für die Decker zum vollständigen oder teilweisen Verhängen von Maschen.

Diese Maschine besitzt auch parallel zu den Nadelreihen bewegbare Kulierkurven pro Fontur, die den Einzelantrieb der Platinen zum Zwecke des Kulierens bewirken.

Diesen Kulierkurven vorauslaufend, sind wahlweise einsetzbare Fadenführer zugeordnet, die über unterschiedlich große Wege bewegt werden und teilungsgerecht während der Ausbildung der Maschen stillgesetzt werden müssen.

Die Maschenbildungselemente, wie bereits erwähnt, sind funktionsweise in ihren Barren angeordnet. Die Barren erhalten in der Regel einen vertikalen und einen horizontalen Antrieb.
Das Grundschema der Barrenführung ist ein fünfgliedriges Getriebe mit zwei angetriebenen Schwingen. Die jeweilige Barre ist in diesem Getriebe eine der beiden Koppeln. Die beiden Antriebsschwingen des Fünfgelenkes besitzen je einen Antrieb, der bisher durch Kurvenscheiben erzeugt wurde.

Die Antriebsbewegung der Maschenbildungselemente wird prinzipiell in Maschenbildungsbewegungen und Deckbewegungen untergliedert.
Bei beiden Funktionen führen die Barren Bewegungen nach völlig unterschiedlichen Bewegungsgesetzen aus.

Zusätzlich muß die horizontale Bewegung der Nadelbarre während des Kulierens der Schleifenreihe durch Kulierkurve und Platinen zum Zwecke der Einstellung der Schleifenlänge unterschiedlich positioniert werden.

Für die Bewegungsformen anderer Maschenbildungselemente - wie z. B. der Abschlagplatinen und der Platinen ist eine Anpassung der Bewegungsformen an die jeweilige Maschenlänge zwar wünschenswert, aber bei den bisher üblichen mechanischen Antrieben nicht realisierbar.

Das Gleiche trifft auf die Ausführung von Deckvorgängen zu, wo es wünschenswert ist, die Arbeitsbewegung der Maschenbildungselemente der jeweiligen Maschenlänge anzupassen.

Die Kurvenbahnen zur Ausführung von Maschenbildungs- und Deckvorgängen sind äußerst kompliziert.

Sie sind an bestimmte Positionen innerhalb eines Zyklus gebunden, wo sie zu den anderen Maschenbildungselementen in engen Grenzen genau definierte Lagen einnehmen müssen.

Zwischen diesen Positionen können die Bewegungsbahnen unter Berücksichtigungen der Bahnen der anderen Maschenbildungselemente möglichst optimalen Bewegungsgesetzen angepaßt werden.

Abgeleitet aus dem herkömmlichen Maschinenkonzept, bei dem eine Umdrehung der Hauptwelle mit ihren Exzentern einen Arbeitszyklus ausführte, soll in der folgenden Beschreibung ein Sachverhalt dem Arbeitszyklus unterlegt werden, der dieser Exzenterwellenumdrehung entspricht.
In einer gewählten, sogenannten Nullposition, ist bisher der Wechsel zwischen den Funktionen Maschenbilden und Decken vorgenommen worden.
Die Tatsache, daß für diesen Funktionswechsel bei mechanisch gesteuerten Maschinen wegen des Auskuppelns der Fadenlege- und Kulierbewegung und des Exzenterwellenversatzes ein größerer Drehwinkelbereich notwendig war, soll dahingestellt bleiben.
Aus dem Gegenstand der europäischen Patentanmeldung EP-A-0 600 263 resultiert der Wunsch, die Bewegungen der Maschenbildungselemente mit Hilfe von elektronisch gesteuerten Einzelantrieben, d.h mit elektronischen Kurven scheiben, zu realisieren.

Derartige Antriebe sind durch die Veränderung von Programmen für die Motoren jeder beliebigen Bewegungsform anpaßbar.
Das Problem besteht jedoch darin, für die Bewegung dieser Einzelantriebe über lange Zeiträume und bei unterschiedlichsten Betriebsbedingungen die Synchronität in der extrem präzisen Form aufrechzuerhalten.

Mit anderen Worten, die Synchronität einer Vielzahl von "elektronischen Kurvenscheiben" muß in jeder Betriebslage gesichert sein.

Die grundsätzliche Konzeption der elektronischen Steuerung soll hier nicht noch einmal im Detail beschrieben werden. Wir verweisen hierzu auf die ältere Anmeldung P 42 38 600.

Für die Sicherung der Synchronität der Bewegungsabläufe als auch der Synchronität der Programmwahl wird dieser elektronischen Steuereinheit eine sog. künstliche Hauptwelle mit entsprechenden Steuerimpulsfolgen zugeordnet.

Dieser Maschinentaktgeber 2 besitzt einen Takterzeuger 21, einen stellbaren Pulsfrequenzwandler 22 für Drehwinkelimpulse auf die die Bewegungsimpulse der Barrenantriebe bezogen werden können.
Diesem Maschinentaktgeber 2 wird mindestens ein Pulsfrequenzwandler 22 zugeordnet, der einen sogenannten Zyklusimpuls 25 erzeugt, der den Wechsel zwischen den Antriebsprogrammen für die einzelnen Barren 5 oder Funktionselemente auslöst.

Die Zykluszeiten, d.h. die Zeit zwischen zwei Impulsen sind dabei nicht regelmäßig an einheitliche Größen gebunden.

So kann der Zyklus für die Ausführung eines Deckvorganges wesentlich kürzer gehalten werden, als der Zyklus für einen Maschenbildungsvorgang, bei dem zunächst die Schleifenreihe kuliert und diese dann zur Maschenreihe ausgeformt werden muß.
Der Zyklusimpulsgeber 25 kann zu diesem Zweck durch einen sogenannten Endimpuls eines Führungsprogrammes zur Freigabe eines Zyklusimpulses angeregt werden.

Auch die Bewegungsimpulse sind nicht zwingend an eine feste Frequenz gebunden.
Sie können in Abhängigkeit von der Größe der auszuführenden Schritte und Bewegungsgesetze in unterschiedlichen Abständen angeordnet werden.
Diese Abstände sind in der Regel frei programmierbar.

Entscheidend ist, daß unabhängig von der jeweiligen Arbeitsgeschwindigkeit der Maschine die Maschenbildungselemente - einschließlich der Fadenführer und Kulierkurven - alle Funktionsbewegungen synchronisiert ausführen.

Das bedeutet, daß innerhalb eines Zyklus alle koordiniert arbeitenden Einzelantriebe nach einem einheitlichen Bewegungsimpulsfolgeprogramm programmiert und gesteuert werden. Von einander verschieden, kann bei den einzelnen Antrieben lediglich Hubrichtung und Hubgröße sein.
Die Auswahl aus mehreren Zyklusimpulsen nach dem Ablauf unterschiedlicher Funktionsprogramme, sollte man einem sog. Führungsprogramm pro Funktion zuordnen.

Die Erzeugung von Bewegungs- und Zyklusimpulsen 26,25 baut in der Regel auf den regelmäßigen Impulsfolgen eines Taktgebers auf. Dieser Taktgeber 21 kann entweder ein gesonderter Schwingquarz oder ein derartiger Takterzeuger des IPC sein.

Ein nachgeordneter Pulsfrequenzwandler 22 wandelt die vorgegebene Taktfolge in eine Taktfolge, die der variablen Arbeitsgeschwindigkeit der Maschine proportional ist. Dabei muß dieser Pulsfrequenzwandler 22 nicht unbedingt eine Pulsfolge mit einheitlichen, oder im wesentlichen einheitlichen Impulsabständen erzeugen. Entscheidend ist, daß die ausgegebene Impulsfolge, die synchrone Abarbeitung aller gleichzeitig auszuführenden Programme ermöglicht.

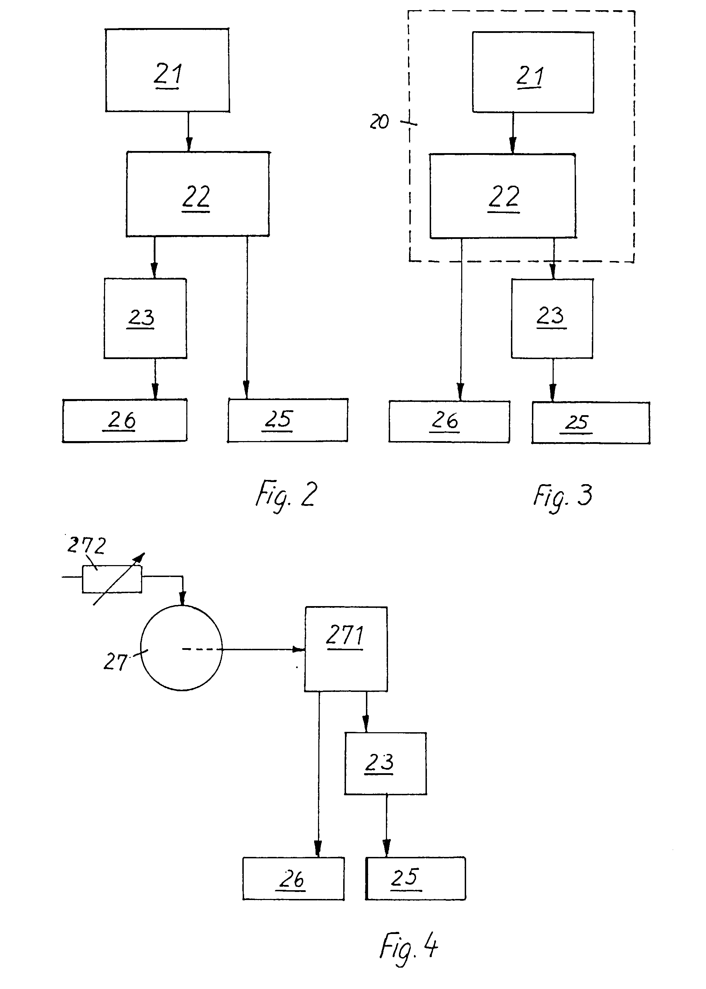

Aus dieser Bewegungsimpulsfolge können durch einen zweiten Pulsfrequenzwandler 23 die Zyklusimpulse 25 abgeleitet werden (Fig. 3).
Hier kommt es darauf an, daß für unterschiedlich lange Programme wahlfrei bestimmte Zyklusimpulse 25 für den Funktionswechsel gewählt werden können.
Diesem zweiten Pulsfrequenzwandler 23 sollte daher ein Eingang von dem jeweiligen Führungsprogramm einer Funktion zugeordnet werden.

Für derartige stell- und steuerbare Pulsfrequenzwandler 22,23 können sogenannte "durchstimmbare Frequenzgeneratoren (VCO) eingesetzt werden.

Es ist auch denkbar, einen, mit einem Drehzahlsteller 272 ausgestatteten stellbaren Motor 27, das kann ein Kleinstmotor sein, als Antrieb für einen inkrementalen Geber 271 (IGR) zu verwenden.
Dieses IGR gibt in Abhängigkeit von der Drehzahl des Motors 27 und der Struktur der Geberscheibe unterschiedliche Impulsfolgen ab, die vorzugsweise als Bewegungsimpulsfolge 26 genutzt werden kann.
Die Zyklusimpulse 25 können daraus mit Hilfe zwischengeschalteter Zähler (23) auf einfache Weise erzeugt werden (Fig. 4)

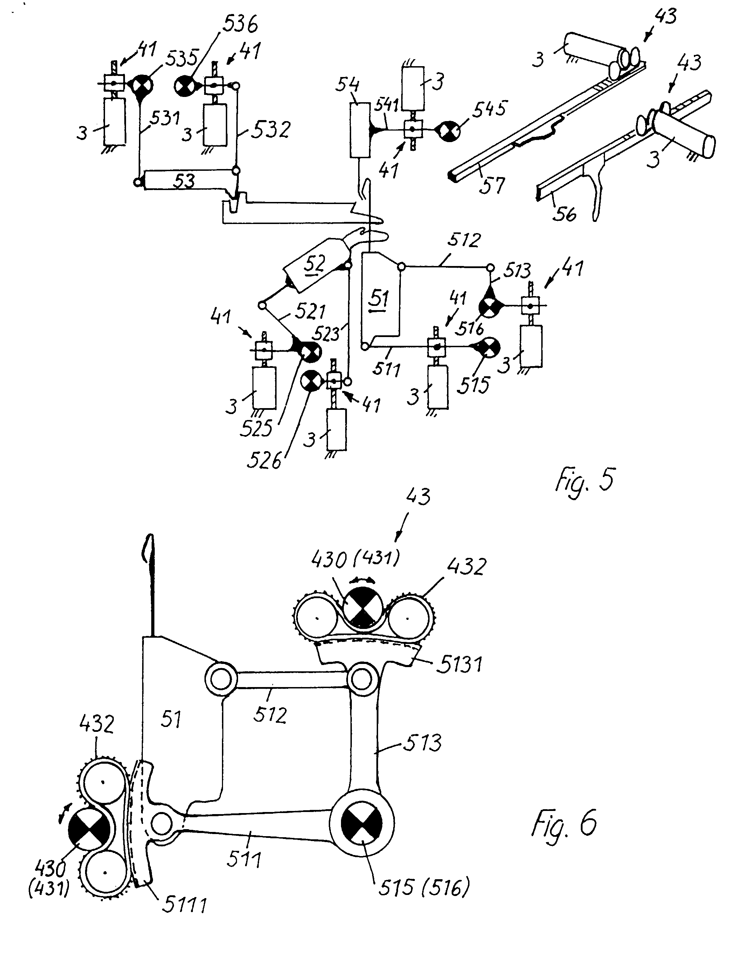

In Fig. 5 ist ein Antriebskonzept für Flachkulierwirkmaschinen mit Nadelbarre 51, Abschlagbarre 52 und Platinenbarre 53 gezeigt.

Für die Ausführung von Deckvorgängen ist dieser Anordnung eine Deckerschienenführung 54 mit ihrem Antrieb zugeordnet. Die Arbeitselemente, die längs der Nadelreihen beweglich sind, die Kulierkurvenschiene 57 und die Fadenführerschienen 56 sind schematisch in diagonaler Richtung dargestellt.

Die Antriebselemente für diese Fadenführer und Kulierkurven besitzen eine Zahnstange an der jeweiligen Schiene 56,57, einen darin eingreifenden Zahnriemen 432 und jeweils einen positionsorientiert steuerbaren Motor 3.
Für die Führung der Barren 5 ist jeweils ein Schwinghebel 511,521,531,541 für eine erste Bewegungsrichtung und eine Führungskoppel 512,522,532 für eine zweite Bewegungsrichtung vorgesehen.

Die Schwinghebel 511,513,521,523,531,533,541 des fünfgliedrigen Getriebes sind auf paarweise angeordneten Schwingwellen 515,516,525,526,535,536, in der Regel lose drehbar gelagert.

Jeder der beiden Schwinghebel 511,513,521,523,531,533,541 des fünfgliedrigen Getriebes ist ein separater positionsorientiert, steuerbarer Motor 3 zugeordnet.
Zum Zwecke der vereinfachten Darstellung wurde hier als Antriebselement je eine Kugelspindelanordnung 41 gewählt.

Daß dabei Maßnahmen getroffen werden müssen, um die geradlinige Versatzbewegung auf die kreisbogenförmige Bahn der Schwinghebel 511,513,521,523,531,533,541 zu übertragen, wird hier als normales fachmännisches Handeln, als Selbstverständlichkeit angesehen.

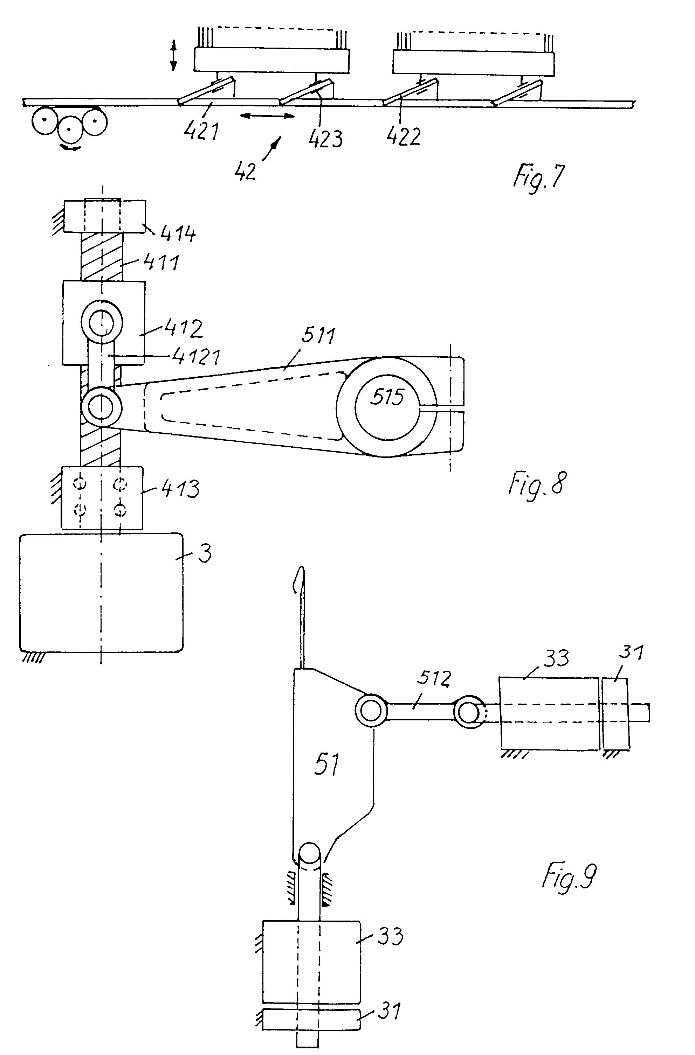

Eine Lösung für dieses Problem zeigt Fig. 8.
Die Anordnung der Motoren 3 nach Fig. 5 ist hier so getroffen, daß die angetriebenen Schwinghebel 511,521,531,541 ihre Bewegung direkt auf die zugeordnete Barre 5 übertragen.

Will man mehrere, einander benachbarte Barren 5 gleicher-Funktion mit einem Motor 3 antreiben, dann ist der angetriebene Schwinghebel 511,513,521,523,531,533,541 fest mit seiner Welle zu verbinden.
Die Schwinghebel 511,513,521,523,531,533,541 in den Nachbarfonturen, die dann ebenfalls fest mit auf dieser Schwingwelle verbunden sind, führen dann die gleiche Bewegung aus, wie der angetriebene Schwinghebel 511,513,521,523,531,533,541.

Bei der in Fig. 6 dargestellten Form der Schwinghebel 511,513,521,523,531,533,541 ist es auch möglich, die Bewegungsübertragung auf die Barren 5 der benachbarten Fonturen über die Antriebswelle 430 des Zahnriemens 432 oder einer Zahnradeinheit vorzunehmen. In diesem Falle haben die Schwinghebel 511,513,521,523,531,533,541 nur noch Führungsfunktionen.

Sie brauchen keine Kräfte über ihre Längsachse und ihre Schwingwelle zu übertragen. Man kann auf diese Weise auch eine der Schwingwellen einsparen und beide Schwinghebel je eines fünfgliedrigen Getriebes paarweise auf einer gemeinsamen Schwingwelle oder Lageranordnung führen.

Im Bereich der benachbarten Fontur werden die Antriebsbewegungen für die Schwingen durch übereinstimmende Zahnriemenanordnungen 432 o.dgl. - ausgehend von den Antriebswellen 430 - auf die Schwinghebel 511,513,521,523,531,533,541 übertragen.

In Fig. 7 wird eine zweite Form der Übertragung der Antriebsbewegung auf einander benachbarte Barren 5 gezeigt. Eine parallel zur Längsachse der Barren 5 verschiebbare Kulissenschiene 421 hat eine Anzahl von Kulissen 422, die starr mit der Kulissenschiene 421 verbunden sind.

Sie sind gegenüber der Längsachse der Kulissenschiene 421 geneigt angeordnet.
Bedingt durch die ortsfeste Führung der Barren 5, erteilt die Kulissenschiene 421 über entsprechend formschlüssig ausgebildete Kulissensteine 423 an den Barren 5 eine Bewegung quer zur Bewegungsrichtung der Kulissenschiene 421.

Die Größe des Hubes der Barre 5 ist stets proportional dem horizontalen Hub der Kulissenschiene 421.

In Fig. 8 ist schematisch - aber in etwas detaillierterer Ausführung - nochmals die Gestaltung des Antriebes eines Schwinghebels 511,513,521,523,531,533,541 durch eine Kugelspindel gezeigt.
Die Mutter 412 der Kugelspindel 411 ist bei dieser Ausführung mit dem Schwinghebel 511 über eine Koppel 4121 verbunden. Die stabile Lagerung der Kugelspindel 411 in Achsrichtung erfolgt hier durch ein zweiseitig formschlüssig wirkendes Axiallager 413.
Auf diese Weise wird eine axiale Belastung der Läuferwelle des Motors 3 vermieden.
Die in Fig. 9 dargestellte Anordnung zeigt die Anwendung von Linearmotoren 33 für die Barren 5 am Beispiel der Nadelbarre 51. Beiden Linearmotoren 33 ist eine Haltebremse 31 zugeordnet.
Der Läufer des vertikalen Linearmotors 33 ist direkt mit der Nadelbarre 51 gekoppelt, während der Läufer des horizontalen Linearmotors 33 über eine Führungskoppel 512 an der Nadelbarre 51 angreift.

Diese Anordnung ist in Grenzen beliebig austauschbar.
Den direkten Angriff des Läufers wird man in der Regel dort wählen, wo die größten Kräfte bei hoher Präzision der Bewegung auftreten.

### Aufstellung der verwendeten Bezugszeichen

- 1: Industrie - Personalcomputer (IPC)
- 11: BUS; extern
- 13: Ansteuereinheit

- 2: Maschinentaktgeber
- 20: durchstimmbarer Frequenzgenerator
- 21: Takterzeuger
- 22: Pulsfrequenzwandler, stellbar
- 23: Pulsfrequenzwandler

- 25: Zyklusimpulsfolge
- 26: Bewegungsimpulsfolge

- 27: Motor
- 271: IGR
- 272: Drehzahlsteller

- 3: Motor, positionsorientiert steuerbar
- 31: Haltebremse
- 32: Meßgeber
- 33: Linearmotor

- 4: Getriebeglieder
- 41: Kugelspindelanordnung
- 411: Kugelspindel
- 412: Mutter
- 4121: Koppel
- 413: Axiallager
- 414: Radiallager

- 42: Kulissentrieb
- 421: Kulissenschiene
- 422: Kulisse
- 423: Kulissenstein
- 43: Zahntrieb
- 430: Antriebswelle
- 431: Zahnrad
- 432: Zahnriemen

- (5): Barren
- 51: Nadelbarre
- 511: Schwinghebel
- 511: - Segment
- 512: Führungskoppel
- 513: Schwinghebel
- 5131: - Segment
- 515: Schwingwelle, vertikal
- 516: Schwingwelle, horizontal

- 52: Abschlagbarre
- 521: Schwinghebel
- 522: Führungskoppel
- 523: Schwinghebel
- 525: Schwingwelle, vertikal
- 526: Schwingwelle, horizontal

- 53: Platinenbarre
- 531: Schwinghebel
- 532: Führungskoppel
- 533: Schwinghebel
- 535: Schwingwelle, vertikal
- 536: Schwingwelle, horizontal

- 54: Deckschienenführung
- 541: Schwinghebel
- 545: Schwingwelle, vertikal

- 56: Fadenführerschiene
- 57: Kulierkurvenschiene

## Patentansprüche

1. Elektronische Steuereinheit
- für Maschinen, insbesondere Textilmaschinen,
-- mit mehreren Funktionselementen,
--- die zyklisch gesteuerte Bewegungsabläufe untereinander synchronisiert ausführen,
- mit einem Industriecomputer (IPC,1), dem
-- Logikbausteine und
-- ein BUS-Treiber für den externen BUS (11), zugeordnet ist
- mit positionsorientiert steuerbaren Motoren (3)
-- für den Antrieb der Funktionselemente,
-- denen Ansteuereinheiten (13) zugeordnet sind, die
--- Programmspeicher für zyklische Programme und
--- mindestens einen rechnergestützten Regelkreis besitzen und
- mit einem Taktgeber (21) für den Maschinentakt,
wobei der Taktgeber (2) für den Maschinentakt,
- einen Takterzeuger und
- mindestens einen stellbaren digitalen Pulsfrequenzwandler (22,23) für einen Zyklustakt (25) und einen Bewegungstakt (26) hat ;
wobei der Zyklustaktimpuls (25)
- die Nullstellung der Ansteuereinheit (13),
- die Programmwahl und
- den Programmstart für zyklische Vorgänge in den Ansteuereinheiten (13) auslöst;
wobei die Bewegungstaktzeiten (26)
- vorgegebene Bruchteile der Zyklustaktzeit (25) sind und
- die Bewegungstaktimpulse (26) das schrittweise Abarbeiten von Hub-Impulsprogrammen auslösen, und
wobei dem positionsorientiert steuerbaren Motor (3) und seiner Ansteuereinheit (13) ein Meßgeber (32) für absolute Hubgrößen zugeordnet ist.

2. Steuereinheit nach Anspruch 1, dadurch gekennzeichnet,
daß die Bewegungstaktimpulse (26) und die Zyklustaktimpulse (25) über den externen BUS (11) den Ansteuereinheiten (13) zuleitbar sind.

3. Steuereinheit nach Anspruch 1 und 2, dadurch gekennzeichnet,
daß der Taktgeber (2) für den Maschinentakt ein durchstimmbarer Frequenzgenerator (20 - VCO) ist, dem mindestens ein digitaler Pulsfrequenzwandler (23) zugeordnet ist.

4. Steuereinheit nach Anspruch 1 bis 2, dadurch gekennzeichnet,
daß der Taktgeber (2) für den Maschinentakt ein, durch einen, bezüglich seiner Drehzahl stellbaren Motor (27) antreibbarer, inkrementaler Geber (271 - IGR) ist, dem ein digitaler Pulsfrequenzwandler (23) zugeordnet ist.

5. Steuereinheit nach Anspruch 1 bis 4, dadurch gekennzeichnet,
daß die zu steuernde Maschine eine Flachkulierwirkmaschine ist, die positionsorientiert steuerbare Motoren (27) für den Antrieb
- der Kulierkurvenschiene (57),
- der Fadenführerschienen (56),
- der Nadelbarre (51),
- der Abschlagbarre (52),
- der Platinenbarre (53) und
- der Deckschienenführung (54) besitzt.

6. Steuereinheit nach Anspruch 5, dadurch gekennzeichnet,
daß die Programmspeicher der Ansteuereinheiten (13) an den positionsorientiert steuerbaren Motoren (3) Programme für die Maschenbildung und Programme für Deckvorgänge besitzen, die von einer zentralen Steuerung des Industrie-Personalcomputers (1 - IPC) wählbar und durch einen Zyklustakt (25) startbar sind.

7. Steuereinheit nach den Ansprüchen 5 und 6, dadurch gekennzeichnet,
daß den Programmen an den Ansteuereinheiten (13) von dem IPC (1) Korrekturprogramme für unterschiedliche Maschenlängen zuordenbar sind.

8. Steuereinheit nach den Ansprüchen 1 bis 7, dadurch gekennzeichnet,
daß die Motoren (3) rotierende Abtriebselemente besitzen und
daß die Getriebeglieder (4) für die Übertragung der Bewegung auf die Funktionselemente (5) formschlüssig ausgebildet sind und
daß jedem Motor (3) eine steuerbare Haltebremse (31) zugeordnet ist.

9. Steuereinheit nach Anspruch 8, dadurch gekennzeichnet,
daß jeder Barre (5) oder einer Gruppe von gleichartigen Barren (5)
- eine durch den Motor (3) getriebene Antriebswelle (430) zugeordnet ist,
-- die über Zahntriebe (43) mit den Barren (5) gekoppelt sind.

10. Steuereinheit nach Anspruch 8, dadurch gekennzeichnet,
daß jeder Barre (5) oder einer Gruppe von Barren (5)
- eine, durch den Motor (3) translatorisch, längs der Barren (5) getriebene und geführte Kulissenschiene (421) zugeordnet ist,
-- die mindestens zwei Kulissen (422), die zur Bewe gungsrichtung der Kulissenschiene (421) geneigt sind, besitzt, und
-- deren Hubkomponente quer zur Achse der Kulissen schiene (421) über mindestens einen formschlüssig geführten Kulissenstein (423) auf die Barre (5) übertragen wird.

11. Steuereinheit nach Anspruch 8, dadurch gekennzeichnet,
daß die Schwinghebel (511,513,521,523,531,533,541) der Koppelgetriebe der Barren (5) starr mit je einer Schwingwelle (515,516,525,526,535,536,545) verbunden sind, die sich über mehrere Fonturen erstreckt und
daß der Schwingwelle (515,516,525,526,535,536,545) ein formschlüssiger Schwingantrieb (41,42,43) mit einem Motor (3) zugeordnet ist.

12. Steuereinheit nach Anspruch 11, dadurch gekennzeichnet,
daß der formschlüssige Schwingantrieb (41,42,43) umfaßt,
- einen Motor (3) mit Kugelspindel (411) an einem ortsfesten Lager (413) und
- als Abtriebsglied eine Mutter (412) am Schwinghebel (511 u.a.m.) ist.

13. Steuereinheit nach Anspruch 1 bis 7 dadurch gekennzeichnet,
daß als Motor (3) ein positionsorientiert steuerbarer Linearmotor (33) mit Ansteuereinheit (13) ist, dessen Abtriebsglied über formschlüssige Getriebeglieder (512) mit den Barren (5) antriebsverbunden ist und dem Abtriebsglied des Linearmotors (33) eine steuerbare Haltebremse (31) zugeordnet ist.

14. Steuereinheit nach Anspruch 1 bis 13, dadurch gekennzeichnet,
daß die formschlüssigen Getriebeglieder (4) für den Antrieb der Barren (5) direkt mit den Barren (5) gekoppelt sind und
daß den Barren (5) gesonderte Führungselemente (Schwinghebel - 511,513,521,523,531,533,541 und Führungskoppel - 512,522,532) zugeordnet sind.

## Claims

1. An electronic control unit
- for machines, especially textile machines
-- comprising several functional elements
--- that carry out cyclically controlled, synchronized sequences of motion; and
- an industrial PC computer (IPC,1) with associated
-- logic chips and
-- a bus driver for the external bus (11); and
- with positioning controllable motors (3)
-- for driving said functional elements,
-- and associated with triggering units (13) equipped with
--- program memories for cyclic programs and
--- at least one computer-aided closed-loop control circuit; and
- comprising a clock pulse generator (21) for the machine clock pulse,
wherein said clock pulse generator (2) for the machine clock pulse comprises
- a clock generator and
- at least one adjustable digital pulse frequency converter (22, 23) for the machining cycle pulse (25) and a motion cycle pulse (26);
wherein said machining cycle pulse (25) triggers
- the zero position of the triggering unit (13),
- program selection, and
- the program start for cyclic processes in the triggering units (13);
wherein the motion cycle times (26)
- are specified fractions of the machining cycle time (25) and
- the motion cycle pulses (26) trigger the step-by-step execution of lift pulse programs, and
wherein the positioning controllable motor (3) and its triggering unit (13) are associated with a measuring transducer (32) for absolute lift measurands.

2. The control unit according to claim 1, characterized in that
the motion cycle pulses (26) and the machining cycle pulses (25) can be fed to the triggering units (13) via the external bus (11).

3. The control unit according to claims 1 and 2, characterized in that
the clock generator (2) for the machine clock pulse is a tunable frequency generator (20 - VCO) that is associated with at least one digital pulse frequency converter (23).

4. The control unit according to claims 1 and 2, characterized in that
the clock generator (2) for the machine clock pulse is an incremental transmitter (271 - IGR) that can be driven by a variable-speed motor (27) and is associated with a digital pulse frequency converter (23).

5. The control unit according to claims 1 to 4, characterized in that
the machine to be controlled is a Cotton's full fashioned knitting machine that is equipped with positioning controllable motors (27) for driving
- the loop forming sinker bar(57),
- the thread carrier sliding bar (56),
- the needle bar (51),
- the knocking-over bar (52),
- the plate guard (53), and
- the retaining plate guide (54).

6. The control unit according to claim 5, characterized in that
the program memories of the triggering units (13) at the positioning controllable motors (3) include programs for loop formation and fashioning processes that can be selected from a centralized control unit of the industrial PC (1 - IPC) and invoked using a cycle pulse (25).

7. The control unit according to claims 5 and 6, characterized in that
the IPC (1) can associate the programs at the triggering units (13) with correction programs for various loop lengths.

8. The control unit according to claims 1 to 7, characterized in that
the motors (3) comprise rotating output elements, and
that the gear components (4) enable a positive no-slip transmission of motion to the functional elements (5), and
that each motor (3) is associated with a controllable holding brake (31).

9. The control unit according to claim 8, characterized in that
each bar (5) or group of similar bars (5)
- is associated with a drive shaft (430) driven by the motor (3),
-- said drive shaft being coupled with the bars (5) via pinion gears (43).

10. The control unit according to claim 8, characterized in that
each bar (5) or group of bars (5)
- is associated with a connecting bar (421) that is driven and guided by the motor (3) in translational motion along the bars (5),
-- said connecting bar comprising at least two connecting members (422) that are inclined towards the direction of movement of the connecting bar (421), and
-- wherein the lift component of said connecting bar is transmitted to the bar (5) in transverse direction to the axis of the connecting bar (421) via positively guided link block (423).

11. The control unit according to claim 8, characterized in that
each of the rocker arms (511,513,521,523,531,533,541) of the coupler mechanisms of the bars (5) is rigidly connected to a rocker shaft (515,516,525,526,535,536,545) that stretches over several knitting heads, and
that said rocker shaft (515,516,525,526,535,536,545) is associated with a positive no-slip oscillating drive (41,42,43) with a motor (3).

12. The control unit according to claim 11, characterized in that
said positive no-slip oscillating drive (41,42,43) comprises
- a motor (3) with a spherical spindle (411) and a stationary bearing (413), and in that
- the output element is a not (412) mounted to the rocker arm (511, etc.).

13. The control unit according to claims 1 to 7, characterized in that
the motor (3) is a positioning controllable linear induction motor (33) with a triggering unit (13), the output element of which is connected to the bar (5) at the drive end via positive no-slip gear drive elements (512), said output element (33) being associated with a controllable holding brake (31).

14. The control unit according to claims 1 to 13, characterized in that
the positive no-slip gear drive elements (4) for driving the bars (5) are directly coupled with the bars (5), and in that
the bars (5) are associated with specific guide elements (rocker arms -511,513,521,523,531,533,541 and guide con-rods - 512,522,532).

## Revendications

1. Organe de commande électronique
- destiné aux machines, en particulier aux machines de l'industrie textile,
-- avec plusieurs éléments de fonction,
--- qui exécutent des séquences de mouvements à commande cyclique et synchronisées les unes par rapport aux autres,
- avec un ordinateur industriel (IPC, 1), auquel sont affectés
-- des éléments logiques et
-- un pilote de BUS pour le BUS externe (11),
- avec des moteurs à commande de position (3)
-- pour l'entraînement des éléments de fonction,
-- auxquels sont affectés des organes de commande (13) qui disposent
--- de mémoires de programmes pour les programmes cycliques et
--- d'au moins un circuit de réglage protégé par ordinateur et
- avec un rythmeur (21) pour la cadence de la machine,
où le rythmeur (2) pour la cadence de la machine,
- dispose d'un générateur de rythme et
- d'au moins un convertisseur de fréquence d'impulsions numérique et réglable (22, 23) pour une cadence de cycles (25) et une cadence de mouvements (26),
où l'impulsion de la cadence des cycles (25) déclenche
- la position zéro de l'organe de commande (13),
- le choix du programme et
- le lancement du programme des processus cycliques dans les organes de commande (13) ;
où les durées de cadence des mouvements (26)
- correspondent aux fractions préalablement définies de la durée de cadence des cycles (25) et
- les impulsions de cadence des mouvements (26) déclenchent l'interruption progressive des programmes d'impulsion de levage, et
où un indicateur de mesure (32) des dimensions absolues de levage est affecté au moteur à commande de position (3) et à son organe de commande (13).

2. Organe de commande selon la revendication 1, caractérisé en ce que
les impulsions de cadence des mouvements (26) et les impulsions de cadence des cycles (25) peuvent être transmises par le BUS externe (11) vers les organes de commande (13).

3. Organe de commande selon les revendications 1 et 2,
caractérisé en ce que
le rythmeur (2) pour la cadence de la machine est un générateur à fréquence variable (20 - VCO), auquel est affecté au moins un convertisseur de fréquence d'impulsions numérique (23).

4. Organe de commande selon les revendications 1 et 2,
caractérisée en ce que
le rythmeur (2) pour la cadence de la machine est un codeur incrémentiel (271 - IGR), qui est commandé par un moteur (27) dont le régime est réglable, et auquel est affecté un convertisseur de fréquence d'impulsions numérique (23).

5. Organe de commande selon les revendications 1 à 4,
caractérisé en ce que
la machine devant être commandée est une machine Cotton qui comporte des moteurs à commande de position (27) servant à entraîner
- le rail courbe ceuillant (57),
- les rails guide-fils (56),
- la barre d'aiguilles (51),
- la barre d'abattage (52),
- la barre à platines (53) et
- le guide du rail de recouvrement (54).

6. Unité de commande selon la revendication 5, caractérisé en ce que
les mémoires de programmes des organes de commande (13) disposent, au niveau des moteurs à commande de position (3), de programmes pour la formation des mailles et de programmes pour les recouvrements, qui peuvent être sélectionnés depuis une commande centrale de l'ordinateur personnel industriel (1 - IPC) et qui peuvent être démarrés par une cadence de cycles (25).

7. Organe de commande selon les revendications 5 et 6,
caractérisé en ce que
des programmes de corrections pour les différentes longueurs de mailles peuvent être affectés aux programmes des organes de commande (13) de l'IPC (1).

8. Organe de commande selon les revendications 1 à 7,
caractérisé en ce que
les moteurs (3) disposent d'éléments de sortie rotatifs et que les pièces d'engrenage (4) sont crabotées pour la transmission du mouvement sur les éléments de fonction (5) et qu'un frein d'arrêt commandé (31) est affecté à chaque moteur (3).

9. Organe de commande selon la revendication 8, caractérisé en ce que
à chaque barre (5) ou à un groupe de barres similaires (5)
- est affecté un arbre de transmission (430) entraîné par le moteur (3),
-- lequel arbre est couplé avec les barres (5) par des éléments dentés (43).

10. Organe de commande selon la revendication 8, caractérisé en ce que
à chaque barre (5) ou à un groupe de barres (5)
- est affecté un rail à coulisse (421) guidé et entraîné par le moteur (3) le long des barres (5) de façon translatoire,
-- lequel rail comporte au moins deux coulisses (422), qui sont inclinées par rapport au sens du mouvement du rail à coulisse (421), et
-- dont les composants de levage sont transmis sur la barre (5) en travers par rapport à l'axe du rail à coulisse (421) par le biais d'au moins un coulisseau guidé craboté (423).

11. Organe de commande selon la revendication 8, caractérisé en ce que
les leviers oscillants (511,513,521,523,531,533,541) de l'engrenage d'accouplement des barres (5) sont chacun fermement reliés à un arbre oscillant (515,516,525,526,535,536,545) qui s'étend sur plusieurs fontures et
qu'un mécanisme d'entraînement oscillant craboté (41,42,43) avec un moteur (3) est affecté aux arbres oscillants (515,516,525,526,535,536,545).

12. Organe de commande selon la revendication 11, caractérisé en ce que
le mécanisme d'entraînement oscillant craboté (41,42,43) comporte,
- un moteur (3) avec arbre à tête sphérique (411) au niveau du palier fixe (413) et
- qu'un écrou (412) au niveau du levier oscillant (511 et les autres) correspond à l'élément de sortie.

13. Organe de commande selon les revendications 1 à 7 caractérisé en ce que
le moteur (3) est un moteur linéaire à commande de position (33) avec un organe de commande (13), dont l'élément de sortie est relié par entraînement aux barres (5) par le biais des pièces d'engrenage crabotées (512) et qu'un frein d'arrêt commandé (31) est affecté à l'élément de sortie du moteur linéaire (33).

14. Organe de commande selon les revendications 1 à 13 caractérisé en ce que
les pièces d'engrenage crabotées (4) sont couplées directement avec les barres (5) pour l'entraînement des barres (5) et
que des éléments de guidage séparés (leviers oscillants - 511,513,521,523,531,533,541 et couples de guidage - 512,522,532) sont affectés aux barres (5).
